(19) 

Europäisches
Patentamt
European
Patent Office
Office européen
des brevets

(11)  **EP 4 405 294 B1**

(12)  **EUROPEAN PATENT SPECIFICATION**

(45) Date of publication and mention
of the grant of the patent:
**13.08.2025   Bulletin 2025/33**

(21) Application number: **22829729.7**

(22) Date of filing: **01.12.2022**

(51) International Patent Classification (IPC):
**C01B 15/023** $^{(2006.01)}$

(52) Cooperative Patent Classification (CPC):
**C01B 15/023**

(86) International application number:
**PCT/EP2022/084049**

(87) International publication number:
**WO 2023/117360 (29.06.2023 Gazette 2023/26)**

(54) **NOVEL PROCESS FOR THE PRODUCTION OF HYDROGEN PEROXIDE**

NEUE VERFAHREN ZUR HERSTELLUNG VON WASSERSTOFFPEROXID

NOUVEAU PROCÉDÉ DE PRODUCTION DE PEROXYDE D'HYDROGÈNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.12.2021   EP 21216775**

(43) Date of publication of application:
**31.07.2024   Bulletin 2024/31**

(73) Proprietor: **Solvay SA
1120 Brussels (BE)**

(72) Inventors:
• **WILLSON, Andrew
3080 Tervuren (BE)**

• **FORMIGA, Nuno
3080 Tervuren (BE)**
• **FESTAS, António
1200 Woluwe-Saint-Lambert (BE)**
• **FEDELI, Massimo
1780 Wemmel (BE)**

(74) Representative: **Kraus & Lederer PartGmbB
Thomas-Wimmer-Ring 15
80539 München (DE)**

(56) References cited:
**EP-B1- 0 958 238      CN-A- 106 672 911
US-A- 5 302 367      US-A- 5 827 493
US-B1- 6 224 845**

Description

## TECHNICAL FIELD

The invention relates to novel process for the production of hydrogen peroxide by the anthraquinone process. In particular, the invention relates to a new flow configuration for the recirculation and removal of the hydrogen peroxide in an aqueous phase from the hydrogen peroxide process.

## TECHNICAL BACKGROUND

Hydrogen peroxide is one of the most important inorganic chemicals to be produced worldwide. Its industrial applications include textile, pulp and paper bleaching, organic synthesis (propylene oxide), the manufacture of inorganic chemicals and detergents, environmental and other applications.

Synthesis of hydrogen peroxide is predominantly achieved by using the large scale Riedl-Pfleiderer process, also called anthraquinone (loop) process or AO (auto-oxidation) process. The process is a cyclic process taking an organic anthraquinone dissolved in solvent and circulating this "Working Solution" (WS) mix around the plant.

The first step of the AO process is the chemical reduction of the anthraquinone derivatives present in the organic working solution using hydrogen gas and a catalyst. The mixture of organic solvents, hydroquinone and quinone species is then separated from the catalyst and the hydroquinone species are oxidized using oxygen, air or oxygen-enriched air thus regenerating the quinone(s) with simultaneous formation of hydrogen peroxide.

Hydrogen peroxide is then typically extracted in an extraction column with water and recovered in the form of a crude aqueous hydrogen peroxide solution, and the working solution is returned to the hydrogenator to complete the loop.

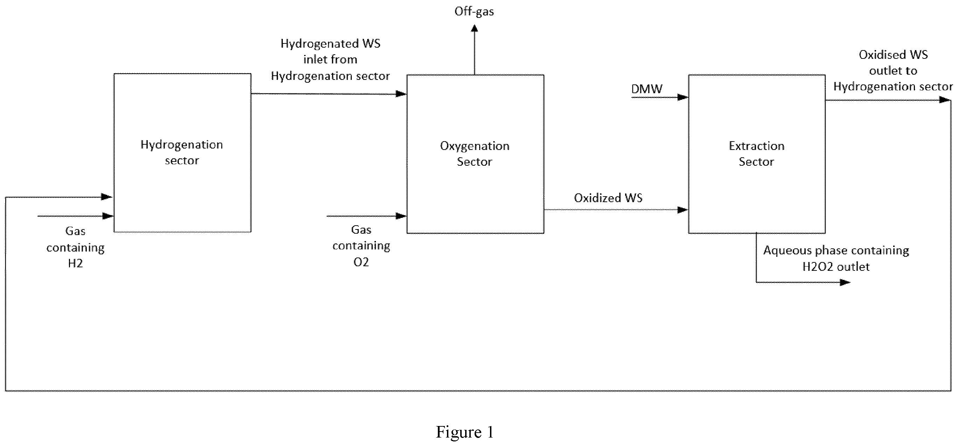

The typical arrangement of a standard hydrogen peroxide plant according to the prior art can therefore be summarised as starting with a hydrogenator, followed by an oxidation reactor, followed by an extraction column. The hydrogen peroxide is typically extracted from the working solution in a flow of demineralised water from the extraction column. The working solution then returns from the extraction column to the hydrogenator (see Figure 1).

Further details of the anthraquinone process for the manufacture of hydrogen peroxide are disclosed in standard text books, e.g. Kirk-Othmer, Encyclopedia of Chemical Technology, August 2001, Chapter "Hydrogen Peroxide"; or Ullmann's Encyclopedia of Industrial Chemistry, fifth edition, 1989, Volume A 13, pages 449-454.

US 5 302 367 A and US 6 224 845 B1 also disclose processes for the production of hydrogen peroxide by the anthraquinone process.

Although both reduction and oxidation reactions are highly efficient in terms of yield and selectivity some degenerated anthraquinone species can form in the working solution mixture.

A typical degenerated anthraquinone species, which is mainly formed in the oxidation reactor, is 6-alkyl-1,2,3,4-tetrahydro-4a,9a-epoxyanthracene-9,10-dione. It is well known in the art that the formation of the unwanted degraded species 6-alkyl-1,2,3,4-tetrahydro-4a,9a-epoxy-anthracene-9,10-dione is increased with the presence of both hydrogen peroxide and the tetrahydroanthraquinone species coming from the hydrogenator in the oxidation reactor (see e.g. Ullmann, F., Gerhartz, W., Yamamoto, Y. S., Campbell, F. T., Pfefferkorn, R., Rounsaville, J. F., & Ullmann, F. (1985), Ullmann's encyclopedia of industrial chemistry, Weinheim, Federal Republic of Germany: VCH, and US patent application No. 2001/0028873). Traces of palladium or other noble metals from the hydrogenator catalyst can act as a catalyst in the oxidation reactor and thus facilitate the formation of this undesired side product.

Furthermore, the epoxide formation is catalysed with the presence of hydrogen peroxide (see e.g. US 2003/0109726), and thus, in the AO-processes known in the prior art, it is necessary to minimise the concentration of hydrogen peroxide in the oxidation reactor to minimise the formation of epoxide species such as 6-alkyl-1,2,3,4-tetrahydro-4a,9a-epoxyanthracene-9,10-dione.

Furthermore, it is also known that mixing an organic solution with hydrogen peroxide can lead to the formation of a mixture that is able to propagate a detonation if the concentration of hydrogen peroxide exceeds a certain concentration and the ratio of the organic solution and the hydrogen peroxide is of a certain ratio. This is a specific risk for the AO-processes known in the prior art, because in the oxidation reactor small pockets of highly concentrated hydrogen peroxide can easily be formed. The concentration of hydrogen peroxide in these pockets is around 60 wt.-% or higher, which is well outside the safety limits of operation. The small pockets of high concentration aqueous hydrogen peroxide occur because the organic working solution is "wet" from contact with the aqueous phase in the extraction column previously in the loop of the working solution (also referred to as residual water droplets).

Additionally, a further problem of AO-process known in the art is that the polarity of the working solution is slightly reduced in oxidation reactor due to the oxidation of the hydroquinone species back to the quinone species and this provokes the supersaturation of the working solution with regard to the aqueous phase. Consequently, small quantities of the aqueous phase come out of the organic solution.

The present invention aims to overcome one or more of the difficulties or disadvantages identified in the prior art documents.

In particular, the objects of the invention are

- To control the concentration of the hydrogen peroxide within the oxidation reactor;
- To avoid the formation of concentrations of hydrogen peroxide, which are greater than the safe limit;
- To increase extraction efficiency and thus increasing the production rate of hydrogen peroxide; and

  - To reduce the formation of undesired degraded anthraquinone species.

## SUMMARY OF THE INVENTION

The present invention relates to a process for the production of hydrogen peroxide by the anthraquinone process, wherein the process comprises the following steps:

(1) hydrogenation of an organic working solution containing one or more anthraquinone derivatives in the presence of a heterogeneous catalyst in a hydrogenation reactor to obtain a hydrogenated organic working solution containing one or more hydrogenated anthraquinone derivatives;

(2) oxidizing the hydrogenated organic working solution obtained in step (1) in an oxidation reactor, which is divided into an upper area, a middle area, and a lower area, by introducing the hydrogenated organic working solution obtained in step (1) to the upper area of the oxidation reactor and an oxygen-containing gas to the lower area of the oxidation reactor to form hydrogen peroxide in a counter current process and to obtain an oxidized organic working solution containing hydrogen peroxide, wherein the middle area of the oxidation reactor is the area above the level where the oxygen-containing gas is introduced and below the level where the organic working solution is introduced into the oxidation reactor;

(3) either forwarding the oxidized organic working solution containing hydrogen peroxide obtained in step (2) to a combined degasser/decanter equipment, or decanting the oxidized organic working solution containing hydrogen peroxide obtained in step (2) directly in the lower area of the oxidation reactor followed by forwarding the oxidized organic working solution containing dissolved hydrogen peroxide to a degasser, for expansion of the entrained gas and degassing the oxidized organic working solution containing hydrogen peroxide;

(4) introducing the degassed oxidized organic working solution obtained in step (3) to the lower part of an extraction column and combining it with an aqueous solution to form an aqueous phase containing hydrogen peroxide and an organic phase;

(5) removing the aqueous phase obtained in step (4) from the lower part of the extraction column and removing the organic phase from the upper part of the extraction column and returning the organic phase back to the hydrogenation reactor;

(6) introducing at least a part of the aqueous phase removed from the extraction column in step (5) back to the middle area of the oxidation reactor; and

(7) recovering an aqueous hydrogen peroxide solution.

According to the invention, it is preferred to recover the aqueous hydrogen peroxide solution in two manners:

(a) the aqueous hydrogen peroxide solution can be directly removed from the lower area of the oxidation reactor (preferably done by decantation as the aqueous phase forms a denser separate phase at the bottom of the oxidation reactor) or

(b) the oxidized working solution containing the aqueous phase that is introduced back to the middle area of the oxidation reactor in step (6), is forwarded to the combined degasser/decanter equipment wherein the oxidized organic working solution is decanted to obtain an aqueous phase containing hydrogen peroxide and an organic phase, and afterwards the aqueous phase containing hydrogen peroxide is removed from said equipment.

Additionally, according to the invention, the part of the aqueous phase obtained in step (5), which is not introduced back to the middle area of the oxidation reactor, can be recovered as aqueous hydrogen peroxide solution in step (7).

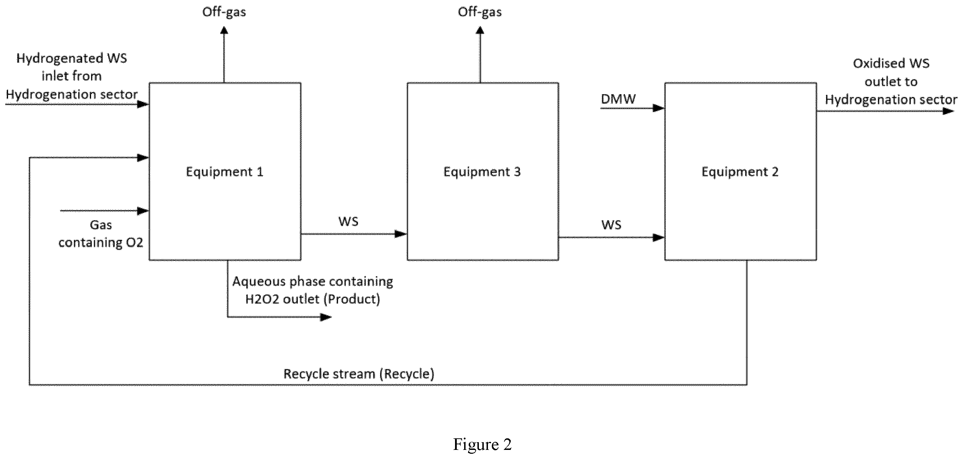

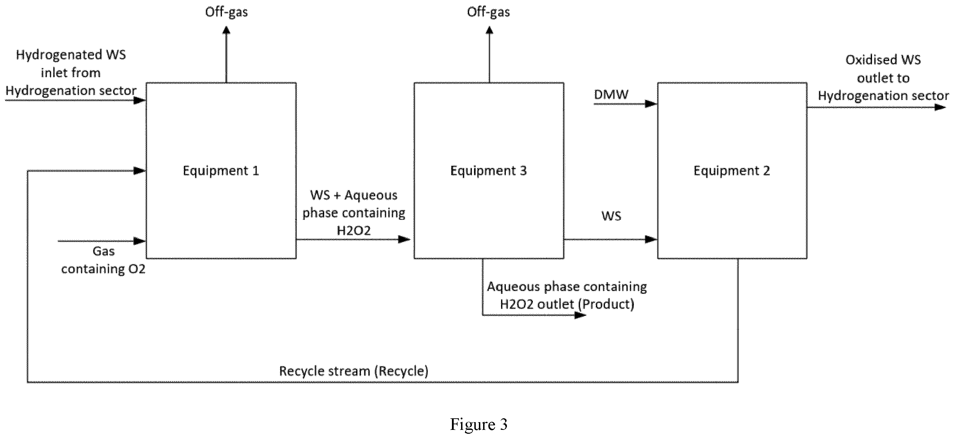

Figures 1 to 3 schematically illustrate the flow configuration of the process streams according to the prior art (Figure 1) and the invention (Figures 2 and 3), wherein Equipment 1 is the oxidation reactor, Equipment 2 is the extraction column, Equipment 3 is a degasser or a combined degasser/decanter equipment, WS is the organic working solution and DMW is demineralised water.

## DETAILED DESCRIPTION OF THE INVENTION

Before the present formulations of the invention are described, it is to be understood that this invention is not limited to particular embodiments described, since such embodiments may, of course, vary. It is also to be understood that the terminology used herein is not intended to be limiting, since the scope of the present invention will be limited only by the appended claims.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the terms "% by weight", "wt.- %", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Unless otherwise defined, all terms used in disclosing the invention, including technical and scientific terms, have the meaning as commonly understood by one of ordinary skill in the art to which this invention belongs. In particular, the reactors used in the process of the invention are reactors usually used in the prior art, if it is not indicated otherwise.

By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The present invention relates to a process for the production of hydrogen peroxide by the anthraquinone process, wherein the process comprises the following steps:

(1) hydrogenation of an organic working solution containing one or more anthraquinone derivatives in the presence of a heterogeneous catalyst in a hydrogenation reactor to obtain a hydrogenated organic working solution containing one or more hydrogenated anthraquinone derivatives;

(2) oxidizing the hydrogenated organic working solution obtained in step (1) in an oxidation reactor, which is divided into an upper area, a middle area, and a lower area, by introducing the hydrogenated organic working solution obtained in step (1) to the upper area of the oxidation reactor and an oxygen-containing gas to the lower area of the oxidation reactor to form hydrogen peroxide in a counter current process and to obtain an oxidized organic working solution containing hydrogen peroxide;

(3) either forwarding the oxidized organic working solution containing hydrogen peroxide obtained in step (2) to a combined degasser/decanter equipment, or decanting the oxidized organic working solution containing hydrogen peroxide obtained in step (2) directly in the lower area of the oxidation reactor followed by forwarding the oxidized organic working solution containing dissolved hydrogen peroxide to a degasser, for expansion of the entrained gas and degassing the oxidized organic working solution containing hydrogen peroxide;

(4) introducing the degassed oxidized organic working solution obtained in step (3) to the lower part of an extraction column and combining it with an aqueous solution to form an aqueous phase containing hydrogen peroxide and an organic phase;

(5) removing the aqueous phase obtained in step (4) from the lower part of the extraction column and removing the organic phase from the upper part of the extraction column and returning the organic phase back to the hydrogenation reactor;

(6) introducing at least a part of the aqueous phase removed from the extraction column in step (5) back to the middle area of the oxidation reactor; and

(7) recovering an aqueous hydrogen peroxide solution.

The term "alkylanthraquinone derivative" is intended to denote a 9,10-anthraquinone substituted in position 1, 2 or 3 with at least one alkyl side chain of linear or branched aliphatic type comprising at least one carbon atom. Usually, these alkyl chains comprise less than 9 carbon atoms and, preferably, less than 6 carbon atoms. Examples of such alkylanthraquinone derivatives are ethylanthraquinones like 2-ethylanthraquinone (EQ), 2-isopropylanthraquinone, 2-sec- and 2-tert-butylanthraquinone (BQ), 1,3-, 2,3-, 1,4- and 2,7-dimethyl-anthraquinone, amylanthraquinones (AQ) like 2-iso- and 2-tert-amylanthraquinone and mixtures of these quinones.

The term "tetrahydroalkylanthraquinone derivative" is intended to denote the 9,10-tetrahydroquinones corresponding to the 9,10-alkylanthraquinones specified above. Hence, for EQ and AQ, they are respectively designated by ETQ and ATQ, their reduced forms (tetrahydroalkylanthrahydroquinones) being respectively ETQH and ATQH.

Preferably, an AQ or EQ or a mixture of both is used.

The term "combined degasser/decanter" is intended to denote one single vessel or equipment carrying out simultaneously the function of both degassing and decanting. Alternatively, the combined degasser/decanter can be two distinct and consecutive vessels or pieces of equipment, that are connected to each other directly or through other pieces of equipment.

In the first process step of the invention, an organic working solution containing one or more anthraquinone derivatives is hydrogenated in the presence of a heterogeneous catalyst to obtain an organic working solution containing one or more hydrogenated anthraquinone, also indicated as hydrogenated organic working solution. Working solutions, which can be hydrogenated in this process step, are known in the art. Suitable working solutions typically comprise an inert solvent, which dissolves the anthraquinone derivative and the anthrahydroquinone derivative used, or a mixture of solvent, wherein one solvent dissolves the anthraquinone derivative and one solvent dissolves the anthrahydroquinone derivative used.

The organic solvent of the working solution is typically a mixture of two solvents, one being a good solvent for dissolving the quinone(s) (generally a non polar solvent, for instance a mixture of aromatic compounds) and the other being a good solvent for dissolving the hydroquinone(s) (generally a polar solvent, for instance a long chain alcohol). Several suitable solvents are known in the prior art. Examples for polar solvents usually used in an AO-Process are diisobutylcarbinol (DIBC), trioctylphosphate (TOP), tetrabutylurea (TBU) and 2-methylcyclohexyl acetate (Sextate). An example for non-polar solvents is S150 a heavy aromatic solvent naphtha (C9/C10), commercially known, but not exclusively as Solvesso 150, Caromax, or Shellsol A150.

Suitable heterogeneous catalysts, which can be used in the process of the invention, are well known in the prior art. The heterogeneous catalyst can be selected from consisting of palladium, platinum, gold, molybdenum, ruthenium, rhodium, nickel and mixtures thereof, and may include a carrier. Furthermore, the catalyst can be a fixed-bed or slurry catalyst.

Before the hydrogenated organic working solution is introduced into the oxidation reactor for carrying out the oxidation reaction according to the invention, the hydrogenated organic working solution is separated from the heterogeneous catalyst. This can be done by any method known in the prior art.

In the process of this invention, one or more acidifying compounds and one or more stabilizing compounds can be added with the aim of reducing the decomposition of the hydrogen peroxide produced and improving the separation in the organic and aqueous phases.

Acidifying compounds can be chosen from inorganic acids intended to maintain the pH of the solution in an acidic range (preferably in the pH range of 0 and 6). The acids employed are generally chosen from sulphuric, nitric and phosphoric acids or a mixture of two or more of these acids.

The stabilising compounds are generally inorganic salts of stannic acid, carboxylic acids such as citric acid or acids containing phosphorus, or a mixture of two or more of these stabilising compounds. Good results can be obtained with stabilizing compounds such as alkali metal stannates, pyrophosphates, metaphosphates and polyphosphates, and mixtures thereof.

The Inorganic salts are intended to denote compounds in which all the hydrogen atoms of the corresponding acid have been replaced with one or more metal atoms, as well as the compounds in which only a proportion of the hydrogen atoms of the acid has been replaced by one or more metal atoms, and which are still acidic in character.

In the process of this invention, both the acidifying and stabilizing compounds can be added in any of the liquid streams entering the Equipment 1 (oxidation reactor) and/or Equipment 2 (extraction column) and/or Equipment 3 (degasser or combined degasser/decanter). According to the invention, the oxidation reactor, which is preferably a column, is divided into three areas: an upper area, a middle area and a lower area.

The middle area of the oxidation reactor is the area above the level where the oxygen-containing gas is introduced and below the level where the organic working solution is introduced into the oxidation reactor.

Additionally, it is preferred that the middle area of the oxidation reactor comprises internals facilitating the reaction. It is further preferred that these internals are selected from the group consisting of trays, packing material and combinations thereof, wherein the trays are preferably perforated trays. Preferably, the middle area of oxidation reactor comprises trays. Moreover, it is preferred that the upper area and/or the lower area of the oxidation reactor does not include trays.

Furthermore, it is preferred that the upper area of the oxidation reactor is a gas-liquid separation section, the middle area is an oxidation reaction section, and the lower area is either a hydrogen peroxide settling section, more preferably a decantation section to transfer the working solution to the degasser, or a collection section to transfer the collected fluids to a combined degasser/decanter

The oxidation reactor used in the invention works in counter current flow, i.e. the oxygen-containing gas, which is preferably selected from the group consisting of air, a mixture of oxygen and inert gas, a mixture of air and oxygen and a combination thereof, enters the lower area of the oxidation reactor and the hydrogenated organic working solution enters the upper area of the oxidation reactor. Working in a counter current regime instead of a co-current regime, as described for example in CN106672911, i.e. the oxygen-containing gas and the hydrogenated organic working solution are both introduced to the lower area of the oxidation reactor, offers a significant advantage, as the separation of the off-gas from the working solution at the top of the reactor is made easier. Additionally, by working in a counter current configuration there is a reduced risk of the formation of a mist, which can be an explosive mixture and can be ignited by a spark leading to an explosion.

Preferably, the oxidation reactor of the invention works at a temperature of between about 50 °C to about 68 °C, more preferably between about 52 °C and about 65 °C, and even more preferred about 57 °C and about 62°C. In order to ensure that the oxidation reactor works at the optimal temperature, the oxidation reactor may include cooler(s). The number of cooler(s) depends on the working flow rate and can be easily determined by a person skilled in the art.

The oxidation reactor preferably operates at a pressure between about 1 and about 10 barg, about 1.5 and about 9.5 barg, about 3 and about 9 barg, about 4 and about 8.5 barg, more preferably between about 5 and about 8 barg.

The residence time of working solution in the oxidation reactor for carrying out the oxidation reaction in a sufficient manner is preferably from about 7 to about 40 minutes, more preferably from about 10 to about 35 minutes or from about 12 to about 20 minutes.

The local hydrogen peroxide concentration in the oxidation reactor can be controlled from 0 to about 70 wt.-%, especially from about 25 to about 55 wt.-% and more preferably from about 40 to about 52 wt.-%.

The oxidized organic working solution comprising hydrogen peroxide obtained in process step (2) of the invention is forwarded, preferably through multiple or a single pipe/chimney, to the degasser/decanter equipment for expansion of the entrained gas and degassing the oxidized organic working solution. Said equipment operates slightly above operating pressure from about 0.05 to about 1.50 barg, preferably from about 0.1 to about 1.0 barg.

In a preferred embodiment of the process of the invention, the degasser or the combined degasser/decanter equipment is fitted with internals to aid degassing; and the decanter in the combined degasser/decanter is empty or includes a coalescence medium such as packing materials, to aid decantation.

The working solution stays in the combined degasser/decanter equipment for a certain time to allow degassing and decantation, or the working solution stays in the degasser for a certain time to allow degassing.

According to the invention, after degassing (and optionally decanting) the working solution, the degassed (and optionally decanted) oxidized working solution is introduced into the lower part of an extraction column and combined, preferably in a counter current process, with an aqueous solution to form an aqueous phase containing hydrogen peroxide and an organic phase. For carrying out the counter current process, the aqueous solution, which is preferably demineralized water (DMW), is added to the upper part of the extraction column.

Due to their density difference the aqueous phase containing hydrogen peroxide can be removed from the lower part of the extraction column and the organic phase can be removed from the upper part of the extraction column and cycled back to the hydrogenation reactor to continuous the AO-process.

In contrast to the prior art processes, wherein (crude) aqueous hydrogen peroxide solution is only recovered from the extraction column, according to the invention, at least a part of the aqueous phase containing hydrogen peroxide, which is removed from the extraction column, preferably the full amount of the aqueous phase, is directed back to the oxidation reactor. Nevertheless, according to the invention, the part of the aqueous phase containing hydrogen peroxide, which is removed from the extraction column and not introduced back to the middle area of the oxidation reactor, can be recovered as aqueous hydrogen peroxide solution.

At least a part of the aqueous phase obtained from the extraction column is introduced into the middle area of the oxidation reactor as defined above. The exact location of the entry point of the aqueous recycle stream into the oxidation reactor is determined by the need to balance the concentration of hydrogen peroxide of the aqueous phase recycled back to the oxidation reactor with the concentration of the hydrogen peroxide in aqueous phase droplets already within the oxidation reactor. In particular, the aqueous phase should be introduced into the oxidation reactor where the hydrogen peroxide concentration of the aqueous phase recycled back to the oxidation reactor matches the hydrogen peroxide concentration already within the oxidation reactor, which happens at the middle area of the oxidation reactor.

When the aqueous phase removed from the extraction column is added back into the middle area of the oxidation reactor, part of the hydrogen peroxide formed in the oxidation reactor in the organic working solution is extracted into the aqueous phase coming from the extraction column. By mass balance the concentration of hydrogen peroxide of said formed aqueous phase is inversely proportional to the flow of the recycled aqueous phase from the extraction column. In summary, the hydrogen peroxide concentration within the oxidation reactor is at its highest when there is no recycle flow and it is at its lowest when the full flow of the aqueous phase stream coming from the extraction column is returned to the oxidation reactor.

By recycling at least a part of the aqueous phase from the extraction column back into the middle area of the oxidation reactor it is possible to control any hydrogen peroxide concentration within the oxidation reactor. In particular, high local hydrogen peroxide concentrations in the oxidation reactor, which are outside of the safety limits can be avoided. It is possible to target the hydrogen peroxide concentration, within the safe operating region.

In addition to the advantage of controlling the concentration of hydrogen peroxide within the oxidation reactor, there is also a chemical advantage of recycling at least a part of the aqueous phase obtained from the extraction column into the middle of the oxidation reactor. By recycling at least a part of the aqueous phase containing the hydrogen peroxide into the middle area of the oxidation reactor the average concentration of the hydrogen peroxide in the oxidation reactor is reduced and thus the formation of the undesired 6-alkyl-1,2,3,4-tetrahydro-4a,9a-epoxyanthracene-9,10-dione species is reduced.

According to the invention, the recovering of the aqueous hydrogen peroxide solution can be carried in two manners:

(a) the aqueous hydrogen peroxide solution can be directly removed from the lower area of the oxidation reactor (preferably done by decantation as the aqueous phase forms a denser separate phase at the bottom of the oxidation reactor); or
(b) the oxidized working solution containing the aqueous phase that is introduced back to the middle area of the oxidation reactor in step (6) is forwarded to the degasser/decanter equipment wherein the oxidized organic working solution is decanted to obtain an aqueous phase containing hydrogen peroxide and afterward the aqueous hydrogen peroxide solution can be removed from said equipment.

The separation of the aqueous hydrogen peroxide solution from the oxidized organic working solution of the oxidation reactor, i.e. the recovering of the aqueous hydrogen peroxide solution, occurs due to the difference in density of the two phase (aqueous and organic) by decantation. The decantation occurs either in the lower area of the oxidation reactor or in a degasser/decanter equipment. It is further preferred that the decantation is achieved just by the residence time and density difference of the two phase in the oxidation reactor or in the decanter/degassing equipment, i.e. the decantation section of the oxidation reactor or decanter does not include a coalesce medium or any other internal that facilitates the decantation - the decantation section / decanter is empty.

Nevertheless, according to the invention, the oxidation reactor and/or degassing/decanter equipment may include facilities to improve the decantation, such as structured packing. The decantation internals material can be stainless steel, polymer (e.g. PTFE, ETFE), ceramic, or a mix between these elements.

The recovered hydrogen peroxide solution can be purified and/or concentrated for further use by methods as known in the art.

As it is demonstrated in the examples, by using the new process flow configuration of the invention and considering the composition of the organic working solution, in particular of the solvent(s) and the anthraquinone derivatives of the organic solvent mixture, it is possible to operate the process with a partition coefficient K defined as

$$K = \frac{\frac{Mass\ of\ H_2O_2\ in\ the\ aqueous\ H_2O_2\ solution\ recovered\ in\ step\ (7)}{Mass\ of\ water\ in\ the\ aqueous\ H_2O_2\ solution\ recovered\ in\ step\ (7)}}{\frac{Mass\ of\ H_2O_2\ in\ working\ solution}{Mass\ of\ working\ solution}}$$

of about 85 or higher, preferably of about 100 or higher, more preferably of about 140 or higher.

Furthermore, the process of the invention shows a high productivity, i.e. preferably a productivity of higher than 14 g hydrogen peroxide per kg working solution. In particular, it is possible to operate the process such that a productivity of the process is of about 8 to about 20 g hydrogen peroxide per kg working solution, preferably of about 14 to 20 g hydrogen peroxide per kg working solution.

The present invention is further illustrated by the following examples. It should be understood that the following examples are for illustration purposes only, and are not used to limit the present invention thereto.

**EXAMPLES**

The equations and calculations below demonstrate why and how the hydrogen peroxide (H2O2) concentrations can be targeted in the oxidation column by using the process of the invention:

## Definitions and Balance

WS = Working Solution
w = Water
hp = H2O2
F = Flow
R = Recycle flow from extraction column to oxidation column
P = Product flow of aqueous phase exiting production unit
Prod = Productivity (g H2O2 per kg Working Solution)
C = Concentration H2O2 in aqueous phase (% wt/wt)
Dp = Residual water droplets
M = Mass of H2O2 produced in oxidiser by reaction

$$K = (\text{Mass of hp in } P \,/\, \text{Mass of w in P}) \,/\, (\text{Mass of hp in WS} \,/\, \text{Mass of WS})$$

Flow naming nomenclature example:

FWShpout - Flow Working Solution hydrogen peroxide out (leaving the oxidiser)

$$A = \text{Ratio out (Mass of hp in P / Mass of w in P)}$$

$$B = \text{Ratio out (Mass of hp in WS / Mass of WS)}$$

$$K = A \,/\, B \text{ - Partition coefficient}$$

Total H2O2 in = Total H2O2 out

$$\text{Total H2O2 in} = M + FRhpin$$

$$\text{Total H2O2 out} = FWShpout + FPhpout$$

$$\text{Total H2O2 out} = FWSout * A / K + Fwout * A$$

$$A = \text{Total hp out} / (FWSout/K + Fwout)$$

The Partition Coefficient K can be varied by varying the concentration of polar solvent and/or by varying the type of polar solvent in the working solution. The value of K can be determined by lab experiments by those experienced in the art.

## Examples 1-3 with use of the recycle of aqueous flow from the extraction column to the oxidation reactor.

These calculated examples apply to both figures 2 and 3. In the case of figure 2 the aqueous product flow P leaves equipment 1, the oxidation reactor, directly. When applying the example to figure 3 it is assumed that the balance applies to the oxidation column only, equipment 1, but that the aqueous product P travels to equipment 3, the decanter, before exiting the system. Equipment 3 does not change the mass balance.

The examples cover three variants:

- Example 1 : the partition coefficient K is varied to demonstrate how the concentration of hydrogen peroxide in the product flow leaving the process can be kept constant by varying the flow and concentration of peroxide in the recycle flow entering the oxidation column from the extraction column.
- Example 2 : the product concentration is varied at constant productivity and/or partition coefficient K, by varying the concentration and flow of hydrogen peroxide in the recycle coming from the extraction column.

- Example 3 : the Productivity is varied to demonstrate how the concentration of hydrogen peroxide in the product flow leaving either the Oxidiser or the combined degasser/decanter can be kept constant even if the productivity is different.

The three variants demonstrate that the concentration of hydrogen peroxide formed in the oxidation column can be controlled and kept below the concentration that can form an explosive mixture with the organic in the oxidation column. It is known that explosive mixtures can be formed between the hydrogen peroxide aqueous solution and the organic solution when the concentration of the hydrogen peroxide in the aqueous solution. It is paramount to have a controllable system to control the concentration of hydrogen peroxide within the oxidation column to avoid such explosive mixtures. The following examples demonstrate how the concentration of hydrogen peroxide in the aqueous phase can be controlled to avoid such explosive mixtures.

The examples in table 1 take into consideration that the total flow of aqueous phase from the extraction column is directed to the middle area of the oxidation column and hence all product is collected either on the lower area of the oxidation or in the combined degasser/decanter.

Table 1

| With recycle from extraction to oxidiser | | Example 1 : Variation in Partition Coefficient K | | | Example 2 : Variation in Recycle from extraction | | | Example 3 : Variation in Productivity | | |
|---|---|---|---|---|---|---|---|---|---|---|
| | | Ex. 1A | Ex. 1B | Ex. 1C | Ex. 2A | Ex. 2B | Ex. 2C | Ex. 3A | Ex. 3B | Ex. 3C |
| **Productivity ratio (H2O2 in WS) - (Prod)** | g/kg | **17** | **17** | **17** | **17** | **17** | **17** | **8** | **14** | **17** |
| **Partition coefficient - K** | - | **115** | **140** | **206** | **115** | **115** | **115** | **140** | **140** | **140** |
| Flow of Working Solution in - (FWSin) | kg/h | 600000 | 600000 | 600000 | 600000 | 600000 | 600000 | 600000 | 600000 | 600000 |
| Flow of Working Solution out - (FWSout) | kg/h | 600000 | 600000 | 600000 | 600000 | 600000 | 600000 | 600000 | 600000 | 600000 |
| Mass of H2O2 formed in reactor - (Mhp) | kg/h | 10200 | 10200 | 10200 | 10200 | 10200 | 10200 | 4800 | 8400 | 10200 |
| Flow of H2O2 entering in Recycle - (FRhpin) | kg/h | 4269 | 3506 | 2383 | 3478 | 4269 | 5217 | 3506 | 3506 | 3506 |
| **Flow of water entering by Recycle - (FRwin)** | **kg/h** | **12467** | **12467** | **12467** | **15300** | **12467** | **10200** | **5867** | **10267** | **12467** |
| **Concentration of H2O2 in recycle entering (CRhpin)** | **% wt** | **26** | **22** | **16** | **19** | **26** | **34** | **37** | **25** | **22** |
| Flow of water leaving in Product - (FPwout) | kg/h | 12467 | 12467 | 12467 | 15300 | 12467 | 10200 | 5867 | 10267 | 12467 |
| Flow of H2O2 leaving in Product - (FPhpout) | kg/h | 10200 | 10200 | 10200 | 10200 | 10200 | 10200 | 4800 | 8400 | 10200 |
| Flow of H2O2 leaving in WS - (FWShpout) | kg/h | 4269 | 3506 | 2383 | 3478 | 4269 | 5217 | 3506 | 3506 | 3506 |
| Mass of H2O2 in WS/Mass of WS leaving - (B) | kg/kg | 0.0071 | 0.0058 | 0.0040 | 0.0058 | 0.0071 | 0.0087 | 0.0058 | 0.0058 | 0.0058 |
| **Mass concentration of HP in aqueous phase (CP)** | **% wt** | **45** | **45** | **45** | **40** | **45** | **50** | **45** | **45** | **45** |

**Equations**

FWSout = FWSin

$$Mhp = FWSin * Prod / 1000$$

FPhpout = Mhp

$$FPwout = FPhpout / CP * (100 - CP)$$

FRwin = FPwout

$$B = A / K = CP / (100 - CP) / K$$

$$FWShpout = B * FWSout$$

FRhpin = FWShpout

$$CRhpin = FRhpin / (FRhpin + FRwin) * 100$$

**Input**

Prod

K

FWSin

CP

**Examples 4-6 with no recycle from the extraction column to the oxidation reactor**

These calculated examples apply to Figure 1.
The examples with no recycle from the extraction column to the oxidiser are split into three variants.

- Example 4 : the partition coefficient K is varied and calculate the concentration of hydrogen peroxide in residual water droplets within the oxidiser.
- Example 5 : No variation of the conditions within the oxidiser as there is no recycle stream, the concentration within the extraction column can be varied.
- Example 6 : the Productivity is varied to demonstrate how the concentration of hydrogen peroxide in the in residual water droplets within the oxidiser is above the safety threshold.

In table 2 the mass concentration of the H2O2 (last line in the table) is calculated not in a large aqueous phase as there is no water addition to equipment 2 as no recycle flow exists. But rather due to residual water entering via the hydrogenation sector where the residual DMW and H2O2 not separated in the extraction column and dissolved in the WS in contact with the catalyst generates water, hence the WS entering the oxidiser is "wet".
This residual water is present as a form of droplets mixed in the hydrogenated working solution entering the oxidiser. This leads to the formation of a mixture that is able to propagate a detonation if the concentration of hydrogen peroxide exceeds a certain concentration.

**Table 2**

| Without recycle from extraction to oxidiser | | Example 4 : Variation in Partition Coefficient K | | | Example 5 : Variation in Recycle Concentration from extraction | | | Example 6 : Variation in Productivity | | |
|---|---|---|---|---|---|---|---|---|---|---|
| | | Ex. 4A | Ex. 4B | Ex. 4C | Ex. 5A | Ex. 5B | Ex. 5C | Ex. 6A | Ex. 6B | Ex. 6C |
| **Productivity ratio (H2O2 in WS)-(Prod)** | g/kg | **17** | **17** | **17** | **17** | **17** | **17** | **8** | **14** | **18** |
| **Partition coefficient - K** | - | **115** | **140** | **206** | **115** | **115** | **115** | **140** | **140** | **140** |
| Flow of Working Solution in - (FWSin) | kg/h | 600000 | 600000 | 600000 | 600000 | 600000 | 600000 | 600000 | 600000 | 600000 |
| Flow of Working Solution out - (FWSout) | kg/h | 600000 | 600000 | 600000 | 600000 | 600000 | 600000 | 600000 | 600000 | 600000 |
| Mass of H2O2 formed in reactor - (Mhp) | kg/h | 10200 | 10200 | 10200 | 10200 | 10200 | 10200 | 4800 | 8400 | 10800 |
| Flow of H2O2 entering in Recycle - (FRhpin) | kg/h | 0 | 0 | 0 | 0 | 0 | 0 | 0 | 0 | 0 |
| **Flow of water entering by recycle - (FRwin)** | **kg/h** | **0** | **0** | **0** | **0** | **0** | **0** | **0** | **0** | **0** |
| **Concentration of H2O2 in recycle entering (CRhpin)** | **% wt** | **0** | **0** | **0** | **0** | **0** | **0** | **0** | **0** | **0** |
| Flow of water leaving in Product - (FPwout) | kg/h | 0 | 0 | 0 | 0 | 0 | 0 | 0 | 0 | 0 |
| Flow of H2O2 leaving in Product - (FPhpout) | kg/h | 10200 | 10200 | 10200 | 10200 | 10200 | 10200 | 4800 | 8400 | 10800 |
| Flow of H2O2 leaving in WS - (FWShpout) | kg/h | 10200 | 10200 | 10200 | 10200 | 10200 | 10200 | 4800 | 8400 | 10800 |
| Mass of H2O2 in WS/Mass of WS leaving - (B) | kg/kg | 0.017 | 0.017 | 0.017 | 0.017 | 0.017 | 0.017 | 0.008 | 0.014 | 0.018 |
| Ratio of H2O2 in droplets in reactor - (DpRatio) | kg/kg | 1.955 | 2.38 | 3.502 | 1.955 | 1.955 | 1.955 | 1.12 | 1.96 | 2.52 |
| **Mass concentration of H2O2 in droplets - (DpConc)** | **% wt** | **66** | **70** | **78** | **66** | **66** | **66** | **53** | **66** | **72** |

EP 4 405 294 B1

## Equations

FWSout = FWSin
FRwin - Input Zero
FRhpin - Input Zero
CRhpin - Input Zero
FPwout = FRwin
FPhpout = Mhp

$$FWShpout = B * FWSout$$

$$Mhp = FWSin * Prod / 1000$$

$$B = Mhp / FWSout$$

$$DpRatio = B * K$$

$$DpConc = DpRatio / (DpRatio + 1) * 100$$

## Input

Prod
K
FWSin
FRhpin
CRhpin
FPwout

From comparing the Table 1 with Table 2 specifically the columns "Variation in Partition Coefficient K" it can be observed that with the present invention regardless of the Partition Coefficient K (which is varied between 115 to 206) the same product concentration of 45% can be obtained within the oxidation reactor when the Recycle Stream is applied.

From Table 2 it can be observed that without the recycle stream from the extraction column to the oxidation reactor the concentration of hydrogen peroxide within the residual water droplets inside the oxidation reactor can reach concentrations > 66 %. In the examples, at a productivity of 17 g $H_2O_2$/kg WS a concentration in the residual water droplets of 66 % to 78 % is obtained within the oxidation reactor. Such concentrations are well outside the safe region of operation. According to the invention, it is possible to operate the oxidation reactor in a safe manner when running productivity of hydrogen peroxide in the working solution > 14 g/kg, or otherwise called "High Productivity".

Only with a Partition Coefficient of roughly below 140 (for instance 85) and a productivity of 8 g/kg is it possible to work with no aqueous recycle and achieve a concentration of hydrogen peroxide within the safety operational limits. Very low values of partition coefficient lead to a poor operation of the extraction column.

By comparing specifically, the columns "Variation in Recycle Concentration from extraction" in both Table 1 and table 2 it is demonstrated that the hydrogen peroxide concentration can be targeted by using the process of the invention. In these examples, taking into account a productivity of 17 g/kg and a partition coefficient of 115, the concentration is controlled between 40% and 50% while if no recycle stream exists the concentration will be 66%. The table demonstrates that the concentration of hydrogen peroxide formed in the oxidiser can be controlled by controlling the flow and concentration of hydrogen peroxide entering into the oxidation column from the extraction column. In the examples in Table 1 with the present invention the concentration of hydrogen peroxide formed in the oxidiser is varied between 40 to 50% with constant productivity and partition coefficient K. In fact a concentration of up to 66% could be targeted by changing the flow and concentration of the recycle stream entering into the oxidation column from the extraction column (examples in table 2). By introducing the Recycle Stream in oxidation reactor, it is possible to Predict and Target the exact

desired $H_2O_2$ concentration of the hydrogen peroxide. Without the Recycle Stream, the $H_2O_2$ concentration in the residual water droplets is always purely determined by the partition coefficient K and productivity.

From comparing the Table 1 with Table 2 specifically the columns "Variation in Productivity", it can be observed that with the present invention when varying the WS Productivity at constant partition coefficient K, the same targeted H2O2 concentration of 45.0% within the oxidiser can be obtained with the Recycle Stream.

While without it concentrations of 53% to 72% are reached in the residual water droplets inside the oxidiser which is outside the safe region of operation. This means that without the Recycle Stream it is dangerous to work at high productivity. This means that with this invention it is possible to run with High productivity (> 14 g H2O2 / kg WS) with negligible safety risks.

To stay inside the safe region of operation without the Recycle Stream plants must run with a low productivity and a low partition coefficient making the operation of the plant inefficient.

In summary, the recycling of at least a part of the aqueous phase removed from the extraction column back to the middle area of the oxidation reactor has the following advantages:

- **Improved separation of the organic phase from the gas phase at the top of the oxidation reactor:**
  By flowing the organic solution down the oxidation reactor and by flowing the air counter current up the oxidation reactor it is possible to greatly reduce the formation of dangerous explosive mist formations in the headspace of the oxidation reactor when it is necessary to separate both phases in the headspace of the oxidation reactor.
- **Control of the concentration of hydrogen peroxide within the oxidation reactor:**
  The concentration of the hydrogen peroxide within the oxidiser is not dependent on the reaction productivity (g/kg) and the partition coefficient K. Production of a controlled strength from the oxidation column can result in there being no need for a distillation column further downstream in the process.
- **Avoidance of the formation of High Strength $H_2O_2$:**
  In combination with working at high productivity this invention allows the control of the concentration of aqueous $H_2O_2$ formed in the oxidation column and avoids concentrations greater than the safe limit.
- **Increased extraction efficiency:**
  The mixing of the aqueous solution with the organic solution within the Oxidiser leads to one extra stage of $H_2O_2$ extraction, which leads to an increase in the overall extraction efficiency.
- **Lower 6-alkyl-1,2,3,4-tetrahydro-4a,9a-epoxyanthracene-9,10-dione formation Rate:**
  It is know that the hydroquinone in combination with $H_2O_2$ increases the rate of formation of 6-alkyl-1,2,3,4-tetrahydro-4a,9a-epoxyanthracene-9,10-dione. This is a species needing reversion. In the reversion process there are losses and that leads to higher quinone consumption. By lowering the concentration of $H_2O_2$ in contact with the WS (as the $H_2O_2$ moves into the aqueous phase) it leads to a reduced epoxide formation rate and subsequently lowers the quinone consumption.

**Claims**

1. A process for the production of hydrogen peroxide by the anthraquinone process, wherein the process comprises the following steps:

   (1) hydrogenation of an organic working solution containing one or more anthraquinone derivatives in the presence of a heterogeneous catalyst in a hydrogenation reactor to obtain a hydrogenated organic working solution containing one or more hydrogenated anthraquinone derivatives;
   (2) oxidizing the hydrogenated organic working solution obtained in step (1) in an oxidation reactor, which is divided into an upper area, a middle area, and a lower area, by introducing the hydrogenated organic working solution obtained in step (1) to the upper area of the oxidation reactor and an oxygen-containing gas to the lower area of the oxidation reactor to form hydrogen peroxide in a counter current process and to obtain an oxidized organic working solution containing hydrogen peroxide,
   wherein the middle area of the oxidation reactor is the area above the level where the oxygen-containing gas is introduced and below the level where the organic working solution is introduced into the oxidation reactor;
   (3) either forwarding the oxidized organic working solution containing hydrogen peroxide obtained in step (2) to a combined degasser/decanter equipment, or decanting the oxidized organic working solution containing hydrogen peroxide obtained in step (2) directly in the lower area of the oxidation reactor followed by forwarding the oxidized organic working solution containing dissolved hydrogen peroxide to a degasser, for expansion of the entrained gas and degassing the oxidized organic working solution containing hydrogen peroxide;
   (4) introducing the degassed oxidized organic working solution obtained in step (3) to the lower part of an extraction column and combining it with an aqueous solution to form an aqueous phase containing hydrogen peroxide and an organic phase;

(5) removing the aqueous phase obtained in step (4) from the lower part of the extraction column and removing the organic phase from the upper part of the extraction column and returning the organic phase back to the hydrogenation reactor;

(6) introducing at least a part of the aqueous phase removed from the extraction column in step (5) back to the middle area of the oxidation reactor; and

(7) recovering an aqueous hydrogen peroxide solution.

2. The process according to claim 1, wherein the aqueous hydrogen peroxide solution is recovered in step (7) by removing the aqueous hydrogen peroxide solution from the lower area of the oxidation reactor.

3. The process according to claim 1, wherein the aqueous hydrogen peroxide solution is recovered in step (7) by forwarding the oxidized organic working solution containing the aqueous phase that is introduced back to the middle area of the oxidation reactor in step (6) to the degasser/decanter equipment wherein the oxidized organic working solution is decanted to obtain an aqueous phase containing hydrogen peroxide and an organic phase and removing the aqueous phase containing hydrogen peroxide from said equipment.

4. The process according to any one of the preceding claims, wherein the part of the aqueous phase containing hydrogen peroxide obtained in step (5), which is not introduced back to the middle area of the oxidation reactor, is recovered as aqueous hydrogen peroxide solution in step (7).

5. The process according to any one of the preceding claims, wherein the middle area of the oxidation reactor comprises internals facilitating the reaction, which are preferably selected from the group consisting of trays, packing material and combinations thereof.

6. The process according to any one of the preceding claims, wherein the upper area of the oxidation reactor is a gas-liquid separation section, the middle area of the oxidation reactor is an oxidation reaction section and the lower area of the oxidation reactor is a hydrogen peroxide settling section and/or a collection section, and wherein the oxidation reactor is preferably a column.

7. The process according to any of the preceding claims, wherein the oxygen containing gas is selected from the group consisting of air, a mixture of oxygen and inert gas, a mixture of air and oxygen and a combination thereof.

8. The process according to any of the preceding claims, wherein the aqueous solution contains demineralized water.

9. The process according to any one of the preceding claims, wherein the oxidation reactor comprises one or more cooler(s).

10. The process according to any one of the preceding claims, wherein the oxidation reactor operates at a pressure between about 1 and about 10 barg.

11. The process according to any one of the preceding claims, wherein the local concentration of hydrogen peroxide present in the oxidation reactor is controlled from 0 to about 70 wt.-%.

12. The process according to any one of the preceding claims, wherein the degasser or the combined degasser/decanter equipment is fitted with internals to aid degassing, and the decanter in the combined degasser/decanter is empty or includes a coalescence medium such as packing materials, to aid decantation.

13. The process according to any one of the preceding claims, wherein the organic working solution obtained in step (3) is combined with the aqueous solution in step (4) in a counter current process.

14. The process according to any one of the preceding claims, wherein the solvent(s) and the anthraquinone derivatives of the organic working solution are chosen such that the process is operated with a partition coefficient K defined as

$$ K = \frac{\frac{Mass\ of\ H_2O_2\ in\ the\ aqueous\ H_2O_2\ solution\ recovered\ in\ step\ (7)}{Mass\ of\ water\ in\ the\ aqueous\ H_2O_2\ solution\ recovered\ in\ step\ (7)}}{\frac{Mass\ of\ H_2O_2\ in\ working\ solution}{Mass\ of\ working\ solution}} $$

of about 85 or higher.

**Patentansprüche**

1. Verfahren zur Herstellung von Wasserstoffperoxid durch das Anthrachinonverfahren, wobei das Verfahren die folgenden Schritte umfasst:

   (1) Hydrieren einer organischen Arbeitslösung, die ein oder mehrere Anthrachinonderivate enthält, in Gegenwart eines heterogenen Katalysators in einem Hydrierungsreaktor, um eine hydrierte organische Arbeitslösung zu erhalten, die ein oder mehrere hydrierte Anthrachinonderivate enthält;
   (2) Oxidieren der bei Schritt (1) erhaltenen hydrierten organischen Arbeitslösung in einem Oxidationsreaktor, der in einen oberen Bereich, einen mittleren Bereich und einen unteren Bereich unterteilt ist, durch Einführen der bei Schritt (1) erhaltenen hydrierten organischen Arbeitslösung in den oberen Bereich des Oxidationsreaktors und eines sauerstoffhaltigen Gases in den unteren Bereich des Oxidationsreaktors, um in einem Gegenstromverfahren Wasserstoffperoxid zu bilden und eine oxidierte organische Arbeitslösung, die Wasserstoffperoxid enthält, zu erhalten,
   wobei der mittlere Bereich des Oxidationsreaktors der Bereich oberhalb der Ebene ist, in der das sauerstoffhaltige Gas eingeführt wird, und unterhalb der Ebene, in der die organische Arbeitslösung in den Oxidationsreaktor eingeführt wird;
   (3) entweder Leiten der bei Schritt (2) erhaltenen oxidierten organischen Arbeitslösung, die Wasserstoffperoxid enthält, in eine kombinierte Entgaser-/Dekanteranlage oder Dekantieren der bei Schritt (2) erhaltenen oxidierten organischen Arbeitslösung, die Wasserstoffperoxid enthält, direkt in dem unteren Bereich des Oxidationsreaktors, gefolgt von Weiterleiten der oxidierten organischen Arbeitslösung, die gelöstes Wasserstoffperoxid enthält, in einen Entgaser zur Expansion des mitgeführten Gases und Entgasung der oxidierten organischen Arbeitslösung, die Wasserstoffperoxid enthält;
   (4) Einführen der bei Schritt (3) erhaltenen entgasten oxidierten organischen Arbeitslösung in den unteren Teil einer Extraktionskolonne und Kombinieren davon mit einer wässrigen Lösung, um eine wässrige Phase, die Wasserstoffperoxid enthält, und eine organische Phase zu bilden;
   (5) Entfernen der bei Schritt (4) erhaltenen wässrigen Phase aus dem unteren Teil der Extraktionskolonne und Entfernen der organischen Phase aus dem oberen Teil der Extraktionskolonne und Rückführen der organischen Phase in den Hydrierungsreaktor;
   (6) Einführen wenigstens eines Teils der wässrigen Phase, die aus der Extraktionskolonne in Schritt (5) entfernt worden ist, zurück in den mittleren Bereich des Oxidationsreaktors; und
   (7) Gewinnen einer wässrigen Wasserstoffperoxidlösung.

2. Verfahren nach Anspruch 1, wobei die wässrige Wasserstoffperoxidlösung bei Schritt (7) durch Entfernen der wässrigen Wasserstoffperoxidlösung aus dem unteren Bereich des Oxidationsreaktors gewonnen wird.

3. Verfahren nach Anspruch 1, wobei die wässrige Wasserstoffperoxidlösung bei Schritt (7) gewonnen wird durch Leiten der oxidierten organischen Arbeitslösung, die die wässrige Phase enthält, die bei Schritt (6) in den mittleren Bereich des Oxidationsreaktors zurückgeführt wird, in die Entgaser/Dekanter-Anlage, wobei die oxidierte organische Arbeitslösung dekantiert wird, um eine wässrige Phase, die Wasserstoffperoxid enthält, und eine organische Phase zu erhalten, und Entfernen der wässrigen Phase, die Wasserstoffperoxid enthält, aus der Anlage.

4. Verfahren nach einem der vorstehenden Ansprüche, wobei der bei Schritt (5) erhaltene Teil der wässrigen Phase, die Wasserstoffperoxid enthält, der nicht in den mittleren Bereich des Oxidationsreaktors zurückgeführt wird, bei Schritt (7) als wässrige Wasserstoffperoxidlösung gewonnen wird.

5. Verfahren nach einem der vorstehenden Ansprüche, wobei der mittlere Bereich des Oxidationsreaktors Einbauten zum Erleichtern der Reaktion umfasst, die vorzugsweise ausgewählt sind aus der Gruppe bestehend aus Böden, Packungsmaterial und Kombinationen davon.

6. Verfahren nach einem der vorstehenden Ansprüche, wobei der obere Bereich des Oxidationsreaktors ein Gas-Flüssigkeits-Trennabschnitt ist, der mittlere Bereich des Oxidationsreaktors ein Oxidationsreaktionsabschnitt ist und der untere Bereich des Oxidationsreaktors ein Wasserstoffperoxid-Absetzabschnitt und/oder ein Sammelabschnitt ist, und wobei der Oxidationsreaktor vorzugsweise eine Kolonne ist.

**7.** Verfahren nach einem der vorstehenden Ansprüche, wobei das sauerstoffhaltige Gas ausgewählt ist aus der Gruppe bestehend aus Luft, einem Gemisch aus Sauerstoff und Inertgas, einem Gemisch aus Luft und Sauerstoff und einer Kombination davon.

**8.** Verfahren nach einem der vorstehenden Ansprüche, wobei die wässrige Lösung entmineralisiertes Wasser enthält.

**9.** Verfahren nach einem der vorstehenden Ansprüche, wobei der Oxidationsreaktor einen oder mehrere Kühler umfasst.

**10.** Verfahren nach einem der vorstehenden Ansprüche, wobei der Oxidationsreaktor bei einem Druck zwischen etwa 1 und etwa 10 barg arbeitet.

**11.** Verfahren nach einem der vorstehenden Ansprüche, wobei die lokale Konzentration von Wasserstoffperoxid, das in dem Oxidationsreaktor vorhanden ist, auf 0 bis etwa 70 Gew.-% gesteuert wird.

**12.** Verfahren nach einem der vorstehenden Ansprüche, wobei der Entgaser oder die kombinierte Entgaser/Dekanter-Anlage mit Einbauten zur Unterstützung von Entgasung ausgestattet ist und der Dekanter in dem kombinierten Entgaser/Dekanter leer ist oder ein Koaleszenzmedium, wie z.B. Packungsmaterialien, zur Unterstützung von Dekantierung enthält.

**13.** Verfahren nach einem der vorstehenden Ansprüche, wobei die bei Schritt (3) erhaltene organische Arbeitslösung bei Schritt (4) in einem Gegenstromverfahren mit der wässrigen Lösung kombiniert wird.

**14.** Verfahren nach einem der vorstehenden Ansprüche, wobei das oder die Lösungsmittel und die Anthrachinonderivate der organischen Arbeitslösung so ausgewählt werden, dass das Verfahren mit einem Verteilungskoeffizienten K, definiert als

$$K = \frac{\dfrac{\textit{Masse von } H_2O_2 \textit{ in der wässrigen } H_2O_2 \textit{ Lösung, die bei Schritt (7)gewonnenen wird}}{\textit{Masse an Wasser in der wässrigen } H_2O_2 \textit{ Lösung, die bei Schritt (7)gewonnenen wird}}}{\dfrac{\textit{Masse von } H_2O_2 \textit{ in der Arbeitslösung}}{\textit{Masse der Arbeitslösung}}}$$

von etwa 85 oder höher betrieben wird.

**Revendications**

**1.** Procédé pour la production de peroxyde d'hydrogène par le procédé anthraquinone, dans lequel le procédé comprend les étapes suivantes :

(1) hydrogénation d'une solution de travail organique contenant un ou plusieurs dérivés d'anthraquinone en présence d'un catalyseur hétérogène dans un réacteur d'hydrogénation pour obtenir une solution de travail organique hydrogénée contenant un ou plusieurs dérivés d'anthraquinone hydrogénés ;
(2) oxydation de la solution de travail organique hydrogénée obtenue à l'étape (1) dans un réacteur d'oxydation, qui est divisé en une zone supérieure, une zone médiane et une zone inférieure, en introduisant la solution de travail organique hydrogénée obtenue à l'étape (1) dans la zone supérieure du réacteur d'oxydation et un gaz contenant de l'oxygène dans la zone inférieure du réacteur d'oxydation pour former du peroxyde d'hydrogène dans un procédé à contre-courant et pour obtenir une solution de travail organique oxydée contenant du peroxyde d'hydrogène,
dans lequel la zone médiane du réacteur d'oxydation est la zone située au-dessus du niveau où le gaz contenant de l'oxygène est introduit et en dessous du niveau où la solution de travail organique est introduite dans le réacteur d'oxydation ;
(3) soit transmission de la solution de travail organique oxydée contenant du peroxyde d'hydrogène obtenue à l'étape (2) à un appareil combiné dégazeur/décanteur, soit décantation de la solution de travail organique oxydée contenant du peroxyde d'hydrogène obtenue à l'étape (2) directement dans la partie inférieure du réacteur d'oxydation, puis transmission de la solution de travail organique oxydée contenant du peroxyde d'hydrogène dissous à un dégazeur, pour l'expansion du gaz entraîné et dégazage de la solution de travail organique oxydée contenant du peroxyde d'hydrogène ;

(4) introduction de la solution de travail organique oxydée dégazée obtenue à l'étape (3) dans la partie inférieure d'une colonne d'extraction et combinaison de celle-ci avec une solution aqueuse pour former une phase aqueuse contenant du peroxyde d'hydrogène et une phase organique ;

(5) élimination de la phase aqueuse obtenue à l'étape (4) de la partie inférieure de la colonne d'extraction et élimination de la phase organique de la partie supérieure de la colonne d'extraction et renvoi de la phase organique dans le réacteur d'hydrogénation ;

(6) introduction d'au moins une partie de la phase aqueuse retirée de la colonne d'extraction à l'étape (5) dans la zone médiane du réacteur d'oxydation ; et

(7) récupération d'une solution aqueuse de peroxyde d'hydrogène.

2.  Procédé selon la revendication 1, dans lequel la solution aqueuse de peroxyde d'hydrogène est récupérée à l'étape (7) en éliminant la solution aqueuse de peroxyde d'hydrogène de la zone inférieure du réacteur d'oxydation.

3.  Procédé selon la revendication 1, dans lequel la solution aqueuse de peroxyde d'hydrogène est récupérée à l'étape (7) par transmission de la solution de travail organique oxydée contenant la phase aqueuse qui est réintroduite dans la zone médiane du réacteur d'oxydation à l'étape (6) vers l'appareil dégazeur/décanteur dans lequel la solution de travail organique oxydée est décantée pour obtenir une phase aqueuse contenant du peroxyde d'hydrogène et une phase organique et élimination de la phase aqueuse contenant du peroxyde d'hydrogène dudit appareil.

4.  Procédé selon l'une quelconque des revendications précédentes, dans lequel la partie de la phase aqueuse contenant du peroxyde d'hydrogène obtenue à l'étape (5), qui n'est pas réintroduite dans la zone médiane du réacteur d'oxydation, est récupérée sous forme de solution aqueuse de peroxyde d'hydrogène à l'étape (7).

5.  Procédé selon l'une quelconque des revendications précédentes, dans lequel la zone médiane du réacteur d'oxydation comprend des éléments internes facilitant la réaction, qui sont de préférence choisis dans le groupe constitué des plateaux, d'un matériau de garnissage et des combinaisons de ceux-ci.

6.  Procédé selon l'une quelconque des revendications précédentes, dans lequel la zone supérieure du réacteur d'oxydation est une section de séparation gaz-liquide, la zone médiane du réacteur d'oxydation est une section de réaction d'oxydation et la zone inférieure du réacteur d'oxydation est une section de décantation et/ou une section de collecte du peroxyde d'hydrogène, et dans lequel le réacteur d'oxydation est de préférence une colonne.

7.  Procédé selon l'une quelconque des revendications précédentes, dans lequel le gaz contenant de l'oxygène est choisi dans le groupe constitué de l'air, d'un mélange d'oxygène et de gaz inerte, d'un mélange d'air et d'oxygène et d'une combinaison de ceux-ci.

8.  Procédé selon l'une quelconque des revendications précédentes, dans lequel la solution aqueuse contient de l'eau déminéralisée.

9.  Procédé selon l'une quelconque des revendications précédentes, dans lequel le réacteur d'oxydation comprend un ou plusieurs refroidisseurs.

10. Procédé selon l'une quelconque des revendications précédentes, dans lequel le réacteur d'oxydation fonctionne à une pression comprise entre environ 1 et environ 10 barg.

11. Procédé selon l'une quelconque des revendications précédentes, dans lequel la concentration locale de peroxyde d'hydrogène présent dans le réacteur d'oxydation est régulée de 0 à environ 70 % en poids.

12. Procédé selon l'une quelconque des revendications précédentes, dans lequel le dégazeur ou l'appareil combiné dégazeur/décanteur est équipé d'éléments internes pour faciliter le dégazage, et le décanteur dans le dégazeur/-décanteur combiné est vide ou comprend un milieu de coalescence tel que des matériaux de garnissage, pour faciliter la décantation.

13. Procédé selon l'une quelconque des revendications précédentes, dans lequel la solution de travail organique obtenue à l'étape (3) est combinée avec la solution aqueuse à l'étape (4) dans un procédé à contre-courant.

14. Procédé selon l'une quelconque des revendications précédentes, dans lequel le ou les solvants et les dérivés d'anthraquinone de la solution de travail organique sont choisis de telle sorte que le procédé fonctionne avec un coefficient de partage K défini comme

$$K = \frac{\dfrac{Masse\ de\ H_2O_2\ dans\ la\ solution\ aqueuse\ H_2O_2\ récupérée\ à\ l'étape\ (7)}{Masse\ d'eau\ dans\ la\ solution\ aqueuse\ H_2O_2\ récupérée\ à\ l'étape\ (7)}}{\dfrac{Masse\ de\ H_2O_2\ dans\ la\ solution\ de\ travail}{Masse\ de\ la\ solution\ de\ travail}}$$

d'environ 85 ou plus.

Figure 1

Figure 2

EP 4 405 294 B1

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5302367 A
- US 6224845 B1
- US 20010028873 A
- US 20030109726 A
- CN 106672911

**Non-patent literature cited in the description**

- **KIRK-OTHMER**. *Encyclopedia of Chemical Technology*, August 2001
- **ULLMANN**. *Encyclopedia of Industrial Chemistry*, 1989, vol. 13, 449-454
- **ULLMANN, F. ; GERHARTZ, W. ; YAMAMOTO, Y. S. ; CAMPBELL, F. T. ; PFEFFERKORN, R. ; ROUNSAVILLE, J. F. ; ULLMANN, F.** Ullmann's encyclopedia of industrial chemistry. *Weinheim, Federal Republic of Germany: VCH*, 1985